# EUROPÄISCHE PATENTANMELDUNG

(11) **EP 0 962 246 A1**
(43) Veröffentlichungstag der Anmeldung: **08.12.1999**
(21) Anmeldenummer: 99108109.2
(22) Anmeldetag: 24.04.1999
(51) Int. Cl.: B01D 46/42

(54) **Gas- oder Luftfilterverschmutzungs-Meldevorrichtung**

(30) Priorität: 06.06.1998 DE 19825364
(71) Anmelder: MAICO ELEKTROAPPARATE-FABRIK GmbH, D-78056 Villingen-Schwenningen (DE)
(72) Erfinder: Lämmer, Franz, 78647 Trossingen (DE); Pfisterer, Jürgen, 78078 Niedereschach (DE)
(74) Vertreter: Grosse, Rainer, Dipl.-Ing.

(57) **Zusammenfassung**

Die Erfindung betrifft eine Gas- oder Luftfilterverschmutzungs-Meldeeinrichtung, insbesondere für einen Ventilator, mit einem Signalgeber, der den Verschmutzungszustand des Filters angibt. Es ist vorgesehen, daß der Signalgeber ein akustischer Signalgeber (19) ist.

## Beschreibung

Die Erfindung betrifft eine Gas- oder Luftfilterverschmutzungs-Meldevorrichtung, insbesondere für einen Ventilator, mit einem Signalgeber, der den Verschmutzungszustand des Filters angibt.

Eine Meldevorrichtung der eingangs genannten Art ist bekannt. Sie weist in einem zum Filter parallel liegenden Bypass einen elektrischen Widerstand auf, der Teil einer elektrischen Brückenschaltung ist. Wird im Laufe des Betriebs durch Verschmutzung des Filters der Luftstrom im Bypass erhöht, so wird der sich dort befindende Widerstand stärker durch die Bypassluft gekühlt, wodurch sich der Betriebspunkt der elektrischen Brücke verschiebt und ein Signalgeber anspricht. Dies kann beispielsweise eine Leuchtdiode oder eine Glühbirne oder dergleichen sein. Mithin kann der Benutzer an dem Leuchten des Signalgebers erkennen, daß ein Austausch des verschmutzten Luftfilters durchgeführt werden muß.

Der Erfindung liegt die Aufgabe zugrunde, eine -gegenüber dem vorstehend genannten Stand der Technik- anders gestaltete Gas- oder Luftfilterverschmutzungs-Meldevorrichtung zu schaffen.

Diese Aufgabe wird erfindungsgemäß dadurch gelöst, daß der Signalgeber ein akustischer Signalgeber ist. Mithin wird dem Benutzer der lufttechnischen Einrichtung mittels eines akustischen Signals mitgeteilt, daß der Filter verschmutzt ist. Nimmt der Benutzer das akustische Signal wahr, so wird er den verschmutzten Filter gegen einen neuen Filter austauschen.

Vorzugsweise ist vorgesehen, daß dem akustischen Signalgeber eine Ton-Ein-/Ausschaltevorrichtung zugeordnet ist. Diese Vorrichtung ermöglicht es, zur Prüfung der Filterverschmutzung in einen Prüfmodus zu schalten. Im Normalbetrieb ist der Prüfmodus ausgeschaltet. Dies hat zur Folge, daß -trotz Filterverschmutzung- im Normalbetrieb der akustische Signalgeber nicht aktiv ist, das heißt, er gibt kein akustisches Signal ab, das -beispielsweise bei einem Ventilator, der in der Toilette eines Hotelzimmers eingebaut ist- als störend empfunden werden würde. Führt jedoch zum Beispiel der Hausmeister eine routinemäßige Prüfung durch, so schaltet er die Ton-Ein-/Ausschaltevorrichtung ein und hört dann das akustische Signal, sofern der Filter verschmutzt ist. Mithin sorgt die Ton-Ein-/Ausschaltevorrichtung dafür, daß der an sich ein Signal abgebende akustische signalgeber an der Tonerzeugung gehindert ist, solange nicht in den Prüfmodus geschaltet wird. Alternativ ist es selbstverständlich auch möglich, derart vorzugehen, daß die Ton-Ein-/Ausschaltevorrichtung den Signalgeber erst aktiviert, wenn in den Prüfmodus geschaltet wird, also keine Hinderung des an sich aktiven Signalgebers vorliegt.

Vorzugsweise ist vorgesehen, daß der akustische Signalgeber als ein von der Luftströmung in einem Bypass zum Filter angetriebener akustischer Signalgeber ist. Mithin erstreckt sich zum Filter ein Bypass, wobei der Volumenstrom (Luftvolumenstrom oder Gasvolumenstrom) durch den Bypass von dem Verschmutzungsgrad des Filters abhängt. Ist der Filter unverschmutzt, so ist die den Bypass passierende Luftmenge relativ klein, das heißt der Strömungswiderstand des Bypasses ist größer als der Strömungswiderstand durch den unverschmutzten Filter. Verschmutzt der Filter im Laufe der Betriebszeit, so erhöht sich der Strömungswiderstand durch den Filter, so daß der Volumenstrom durch den Bypass ansteigt. Dies hat zur Folge, daß der akustische Signalgeber anspricht. Mittels der Ton-Ein-/Ausschaltevorrichtung kann in dem erwähnten Prüfmodus kontrolliert werden, ob der akustische Signalgeber einen Ton abgibt, der darauf schließen läßt, daß ein Luftfilteraustausch erforderlich ist.

Nach einer Weiterbildung der Erfindung ist vorgesehen, daß der akustische Signalgeber als Pfeife ausgebildet ist. Unter "Pfeife" sind alle Einrichtungen zu verstehen, die aufgrund einer Luftströmung - die insbesondere den erwähnten Bypass passierteinen Signalton abgeben. So sind zum Beispiel auch Flöten mit in diesem Begriff eingeschlossen und auch andere Bauteile, bei denen zum Beispiel keine schwingende Luftsäule vorliegt, sondern Bauteile in Schwingungen versetzt werden, zum Beispiel Zungen oder dergleichen.

Ferner ist es vorteilhaft, wenn die Ton-Ein-/Ausschaltevorrichtung als den Bypass absperrendes Verschlußelement ausgebildet ist. In einem solchen Falle erfolgt ein Ansprechen des akustischen Signalgebers erst dann, wenn der Bypass im erwähnten Prüfmodus von der Ton-Ein-/Ausschaltevorrichtung freigegeben wird, das heißt, wenn dort eine Luftströmung passieren kann.

Zusätzlich oder alternativ ist es jedoch -wie obenstehend bereits angedeutet- auch möglich, daß der akustische Signalgeber ansprechen würde, jedoch mittels der Ton-Ein-/Ausschaltevorrichtung daran gehemmt ist. Dies ist beispielsweise der Fall, wenn als akustischer Signalgeber eine mit Durchgangskanal, nämlich den Bypass, versehene Pfeife eingesetzt wird, deren quer vom Durchgangskanal abgehendes Pfeifenloch von einem Element der Ton-Ein-/Ausschaltevorrichtung im Normalbetrieb abgedeckt ist. Erfolgt der Prüfmodus, so wird diese Abdeckung entfernt und die Pfeife kann einen Ton abgeben.

Es ist ferner vorteilhaft, wenn das Verschlußelement an einem verlagerbaren Teil des Ventilators angeordnet ist. Zu Prüfzwecken ist es dann lediglich erforderlich, dieses verlagerbare Teil in die Prüfstellung zu bringen, wodurch -im Falle eines schmutzigen Filters- der akustische Signalgeber anspricht.

Besonders vorteilhaft ist es, wenn das verlagerbare Teil ein Deckel, insbesondere ein Klappdeckel ist. Für den Prüfzweck ist es dann nur erforderlich, diesen Deckel anzuheben oder abzunehmen, um zu testen, in welchem Zustand sich der Filter befindet.

Nach einer besonders bevorzugten Ausführungsform ist der Deckel beziehungsweise Klappdeckel derart am Ventilator angeordnet, daß er eine Filteraufnahme öffenbar abdeckt, in der der Filter austauschbar angeordnet ist. Insofern übernimmt der Deckel beziehungsweise Klappdeckel zwei Funktionen, indem er einerseits durch öffnen beziehungsweise Abnehmen einen Zugang zum Filter schafft und andererseits zum Einschalten des Prüfmodus' verwendet werden kann. Für den Prüfzweck muß daher lediglich der Deckel ein wenig angehoben werden, um zu testen, ob der Signalgeber einen Signalton abgibt. Ist dies nicht der Fall, so kann der Deckel sofort wieder geschlossen werden. Hört der Benutzer den Prüfton, so öffnet er den Deckel vollständig, entnimmt den verschmutzten Filter und ersetzt diesen durch einen neuen.

Die Zeichnungen veranschaulichen die Erfindung anhand eines Ausführungsbeispiels, und zwar zeigt:
- Figur 1: eine perspektivische Ansicht auf einen mit Gas- oder Luftfilterverschmutzungs-Meldevorrichtung versehenen Ventilator,
- Figur 2: den Ventilator der Figur 1 mit geöffnetem Klappdeckel,

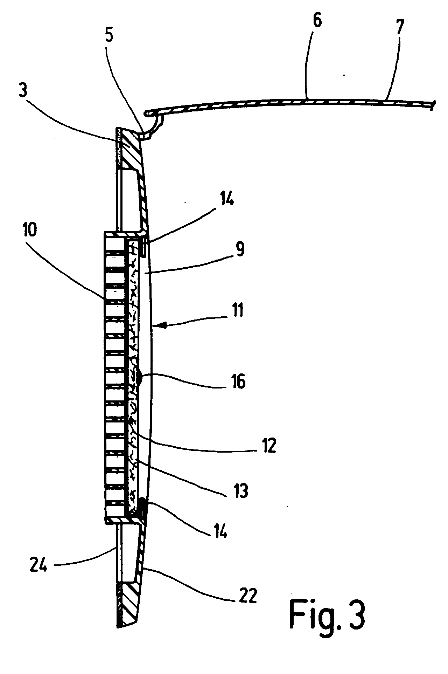

- Figur 3: einen Schnitt durch die Frontwand des Ventilators,
- Figur 4: eine Rückansicht auf die Frontwand des Ventilators und
- Figur 5: eine perspektivische Ansicht auf einen akustischen Signalgeber, der die geschnitten gezeichnete Frontwand durch setzt.

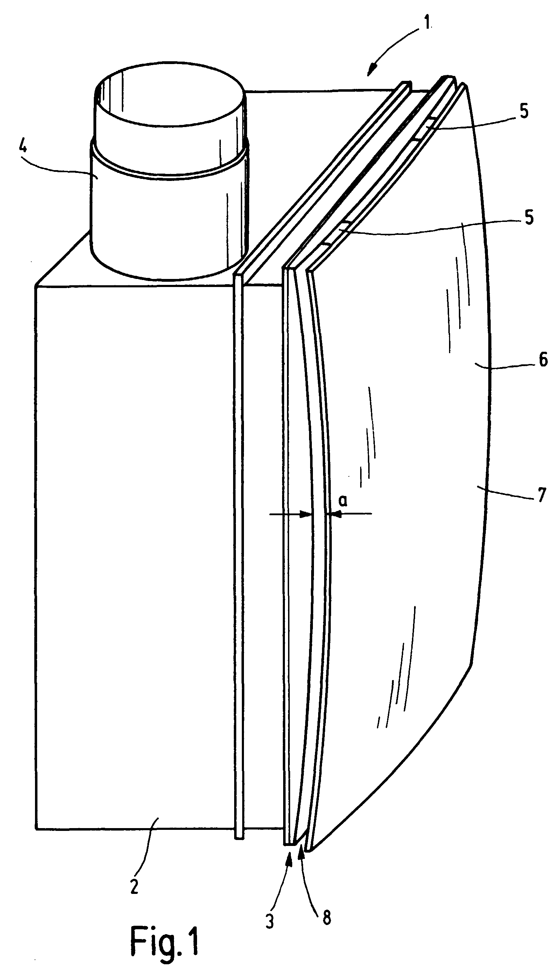

Die Figur 1 zeigt einen Ventilator 1, wie er insbesondere bei Einrohr-Lüftungssystemen in Gebäuden eingesetzt wird. Weist das Gebäude beispielsweise fensterlose Toiletten auf, so wird in jede Toilette ein Ventilator 1 als Unterputzventilator installiert, das heißt, das Gehäuse 2 des Ventilators wird eingemauert, derart, daß lediglich die Frontwand 3 des Gehäuses 2 in Erscheinung tritt, das heißt, geringfügig über die Fläche der Wand des Raumes vorsteht. Innerhalb des Gehäuses 2 ist ein elektrischer Antriebsmotor angeordnet, dessen Welle mit einem Laufrad verbunden ist, das sich innerhalb eines Luftführungsgehäuses dreht, wodurch im Bereich der Frontwand Luft angesaugt und über einen am Gehäuse 2 angeordneten Luftauslaßstutzen 4 einem -nicht dargestellten- Einrohrlüftungssystem zugeführt wird. Die Ventilatoreinheit, also der elektrische Antriebsmotor, das Laufrad und das Luftführungsgehäuse können beispielsweise als Radialventilator-Einheit ausgebildet sein.

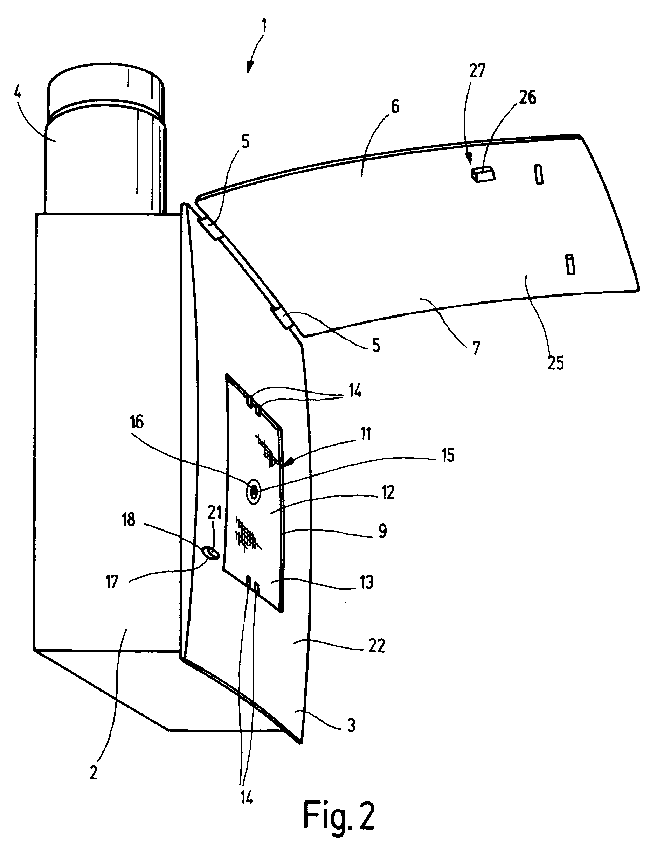

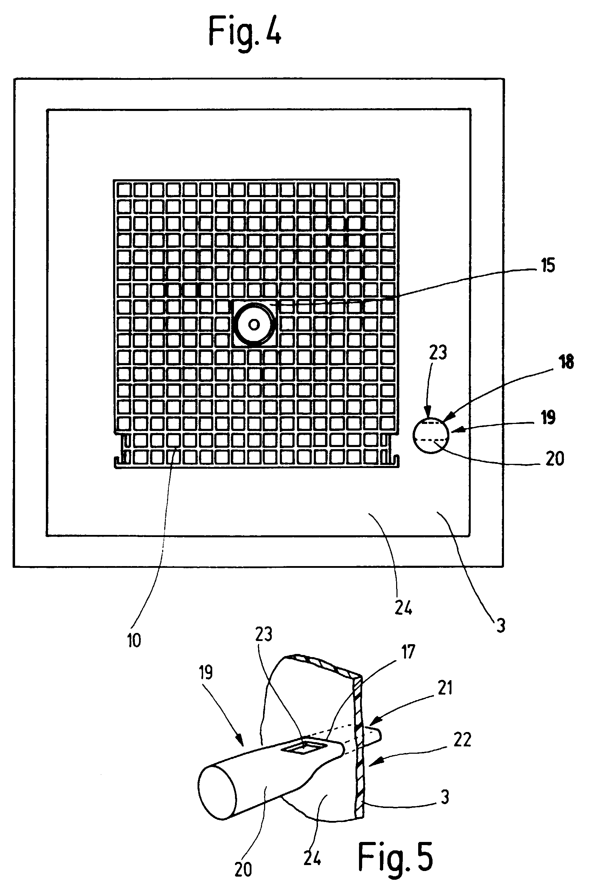

Die Figur 2 zeigt, daß an der Frontwand 3 über Scharniere 5 eine Abdeckung 6 befestigt ist. Die Scharniere 5 können als Filmscharniere ausgebildet sein; die Abdeckung 6 bildet einen Klappdeckel 7, der in seinem -in der Figur 1 dargestellten- geschlossenen Zustand zur Frontwand 3 einen Abstand a einhält, so daß ein Freiraum 8 ausgebildet ist. Im Betrieb des Ventilators wird Raumluft allseitig in den Freiraum 8 eingesaugt und tritt dann in einen die Frontwand durchsetzenden Durchbruch 9 in das Innere des Gehäuses 2 ein. Im Normalbetrieb, also mit geschlossenem Klappdeckel 7, wird der Durchbruch 9 aufgrund der Abdeckung 6 optisch verdeckt. Der Durchbruch 9 ist mit einer vertieft liegenden Gitteranordnung 10 (Figur 4) versehen, derart, daß eine Aufnahme 11 für einen Filter 12 gebildet ist. Der Filter 12 ist als austauschbare Filtermatte 13 ausgebildet, die in die Aufnahme 11 austauschbar eingelegt werden kann. Im eingelegten Zustand wird die Filtermatte 13 von Haltenasen 14 überfangen, so daß der Filter 12 in seiner Position gehalten ist. Die Filtermatte 13 weist eine zentrale Öffnung 15 auf, in der der Kopf einer Befestigungsschraube 16 liegt, mit der die Frontwand 3 am übrigen Gehäuse 2 gehalten ist.

Seitlich neben der Aufnahme 11 ist ein weiterer Durchbruch 17 in der Frontwand 3 ausgebildet. Mithin bildet der Durchbruch 17 einen Bypass 18 zum Durchbruch 9 und damit zum Filter 12. Gemäß der Figuren 2 und 5 ist in den Durchbruch 17 ein akustischer Signalgeber 19 eingesetzt, der als Pfeife 20 ausgebildet ist. Die Pfeife 20 besitzt einen Lufteinlaß 21, der auf der Außenseite 22 der Frontwand 3 liegt, also auf der Seite der Frontwand 3, die dem Klappdeckel zugekehrt ist. Die Pfeife 20 weist ferner ein seitlich liegendes Pfeifenloch 23 auf, das innerhalb des Gehäuses 2 liegt, also auf der Rückseite 24 der Frontwand 3. Auf der Innenseite 25 des Klappdeckels 7 befindet sich ein eine Ton-Ein-/Ausschaltevorrichtung 27 bildendes elastisches Verschlußelement 26 in einer Position derart, daß bei geschlossenem Klappdeckel 7 der Lufteinlaß 21 der Pfeife 20 luftdicht abgedeckt wird. Diese Abdeckung hat nicht nur die Wirkung, daß die Pfeife 20 nicht ansprechen kann, sondern auch noch den wichtigen Nebeneffekt, daß eine Verschmutzung des Signalgebers verhindert wird. Wird -gemäß Figur 2-der Klappdeckel 7 geöffnet, so wird der Lufteinlaß 21 vom Verschlußelement 26 freigegeben.

Es ergibt sich folgende Funktionsweise:

Es wird davon ausgegangen, daß der Ventilator einen sauberen Filter 12 aufweist und daß der Klappdeckel 7 geschlossen ist. Wird nun der Ventilator 1 in Betrieb genommen, dies kann periodisch oder aber auch kontinuierlich erfolgen, so wird im Laufe der Zeit ein Verschmutzen des Filters 12 erfolgen. Ziel muß es daher sein, ab einem bestimmten Verschmutzungsgrad den Filter 12 gegen einen neuen Filter auszutauschen. Im Laufe des Betriebs ist daher von Zeit zu Zeit von einer Bedienperson der Filterzustand zu überprüfen. Da die Bedienperson nicht in der Lage ist, anhand der Filterfarbe oder dergleichen zu erkennen, ob die Verschmutzung schon derart weit fortgeschritten ist, daß ein Austausch des Filters erforderlich ist, wird der beschriebene akustische Signalgeber 19 für die Entscheidung eines Filterwechsels verwendet. Die Bedienperson braucht nur - zum Beispiel im Zuge einer zyklischen Routineuntersuchung- den Klappdeckel 7 geringfügig anzuheben, so daß das Verschlußelement 26 den Lufteinlaß 21 der Pfeife 20 freigibt. Ist die Filterverschmutzung noch nicht sehr weit fortgeschritten, so wird in einem solchen Falle der den Filter 12 durchsetzende Luftstrom gegenüber dem Luftstrom im Bypass 18 und damit durch die Pfeife 20 hindurch nur sehr klein sein. Schreitet die Filterverschmutzung fort, so daß sich der Strömungswiderstand durch den Filter 12 erhöht, so wird im Falle des Öffnens des Klappdeckels 7 der Volumenstrom durch den Bypass 18 entsprechend größer sein, mit der Folge, daß die Pfeife 20 ein akustisches Signal abgibt. Öffnet somit die Bedienperson im Zuge der Routineuntersuchung den Deckel 7 geringfügig, so daß der Lufteinlaß 21 freigegeben ist, so wird -je nach Verschmutzungszustand des Filters 12- die Pfeife 20 ein Signal abgeben oder nicht. Wird das Signal abgegeben, so öffnet die Bedienperson den Klappdeckel 7 hinreichend weit -beispielsweise so wie in der Figur 2 dargestellt-, so daß sie Zugriff zur Aufnahme 11 erhält und den als Filtermatte 13 ausgebildeten Filter aus der Aufnahme 11 herausnehmen kann. Da die Filtermatte 13 elastisch ist, läßt sie sich derart verformen, daß sie nicht mehr von den Haltenasen 14 überfangen wird und demzufolge herausgenommen werden kann. Es erfolgt anschließend das Einsetzen eines neuen, sauberen Filters 12. Ist dies erfolgt, wird der zuvor hörbare Pfeifton des akustischen Signalgebers 19 verstummen, da -sofern beim Filterwechesl der Ventilator weiterhin in Betrieb ist- der den Durchbruch 9 durchsetzende Luftstrom aufgrund des sauberen Filters ansteigen, demzufolge der Luftstrom in Bypass 18 sinken und daher die Ansprechschwelle der Pfeife 20 unterschritten wird. Der Bediener wird schließlich -nach erfolgtem Filterwechsel- den Klappdeckel 7 herunterklappen, so daß er mittels geeigneter -nicht dargestellter-Rastmittel an der Frontwand 3 einrastet, wobei in der Raststellung das Verschlußelement 26 den Lufteinlaß 21 dichtend abdeckt.

## Patentansprüche

1. Gas- oder Luftfilterverschmutzungs-Meldevorrichtung, insbesondere für einen Ventilator, mit einem Signalgeber, der den Verschmutzungszustand des Filters angibt, **dadurch gekennzeichnet**, daß der Signalgeber ein akustischer Signalgeber (19) ist.

2. Vorrichtung nach Anspruch 1**, dadurch gekennzeichnet**, daß dem akustischen Signalgeber (19) eine Ton-Ein-/Ausschaltevorrichtung (27) zugeordnet ist.

3. Vorrichtung nach einem der vorhergehenden Ansprüche, **dadurch gekennzeichnet**, daß der akustische Signalgeber (19) als ein von der Luftströmung in einem Bypass (18) zum Filter (12) angetriebener akustischer Signalgeber (19) ist.

4. Vorrichtung nach einem der vorhergehenden Ansprüche, **dadurch gekennzeichnet**, daß der akustische Signalgeber (19) als Pfeife (20) ausgebildet ist.

5. Vorrichtung nach einem der vorhergehenden Ansprüche, **dadurch gekennzeichnet**, daß die Ton-Ein-/Ausschaltevorrichtung (27) als den Bypass (18) absperrendes Verschlußelement (26) ausgebildet ist.

6. Vorrichtung nach einem der vorhergehenden Ansprüche, **dadurch gekennzeichnet**, daß die Ton-Ein-/Ausschaltevorrichtung (27) als den Strömungsweg durch die Pfeife (20) absperrendes Verschlußelement (26) ausgebildet ist.

7. Vorrichtung nach einem der vorhergehenden Ansprüche, **dadurch gekennzeichnet**, daß die Pfeife (20) ein Pfeifenloch (23) aufweist, das vom Verschlußelement (26) der Ton-Ein-/Ausschaltevorrichtung (27) beim Ausschalten abgedeckt wird.

8. Vorrichtung nach einem der vorhergehenden Ansprüche, **dadurch gekennzeichnet**, daß die Pfeife (20) einen Lufteinlaß (21) aufweist, der vom Verschlußelement (26) der Ton-Ein-/Ausschaltevorrichtung (27) beim Ausschalten abgedeckt wird.

9. Vorrichtung nach einem der vorhergehenden Ansprüche, **dadurch gekennzeichnet**, daß das Verschlußelement (26) an einem verlagerbaren Teil des Ventilators (1) angeordnet ist.

10. Vorrichtung nach einem der vorhergehenden Ansprüche, **dadurch gekennzeichnet**, daß das verlagerbare Teil ein Deckel -vorzugsweise ein Klappdeckel-(7) ist.

11. Vorrichtung nach einem der vorhergehenden Ansprüche**, dadurch gekennzeichnet**, daß der Deckel beziehungsweise Klappdeckel (7) eine Filteraufnahme (Aufnahme 11) öffenbar abdeckt, in der das Filter (12) austauschbar angeordnet ist.
